Europäisches Patentamt

European Patent Office

Office européen des brevets

(11) Publication number: **O 025 434**
**B1**

(12) EUROPEAN PATENT SPECIFICATION

(45) Date of publication of patent specification: **11.01.84**

(51) Int. Cl.³: **B 62 D 55/00**

(21) Application number: **79901306.5**

(22) Date of filing: **19.03.79**

(86) International application number:
**PCT/US79/00177**

(87) International publication number:
**WO 80/02014 02.10.80 Gazette 80/22**

(54) Equalizer bar pad construction.

(43) Date of publication of application:
**25.03.81 Bulletin 81/12**

(45) Publication of the grant of the patent:
**11.01.84 Bulletin 84/2**

(84) Designated Contracting States:
**FR GB**

(56) References cited:
**FR - A - 2 009 582**
**US - A - 3 759 541**
**US - A - 3 924 703**
**US - A - 4 018 295**

(73) Proprietor: **CATERPILLAR TRACTOR CO.**
**100 Northeast Adams Street**
**Peoria Illinois 61629 (US)**

(72) Inventor: **CORRIGAN, Ara L.**
**1000 Blythwood Pl. Apt.A-9**
**Davenport,IA 52804 (US)**
Inventor: **STYCK, Wayne G.**
**36 Rainbow Dr.**
**Bettendorf,IA 52722 (US)**
Inventor: **WALDEN, Gerald M.**
**2015 W.63rd**
**Davenport,IA 52806 (US)**

(74) Representative: **Jackson, Peter Arthur et al,**
**GILL JENNINGS & EVERY 53-64 Chancery Lane**
**London WC2A 1HN (GB)**

Courier Press, Leamington Spa, England.

## Equalizer bar pad construction

This invention relates to a vehicle having a transverse equalizer bar.

As shown in our US—A—3,759,541 a stabilizer for articulated wheel loaders is provided for improving the lateral stability of an oscillating rear axle portion of the vehicle. The stabilizer includes resilient members mounted between the rear axle and the frame of the vehicle so as to prevent unrestrained oscillation of the vehicle in relation to the frame. As shown in Figure 3 of that patent specification, each resilient member is captured between the frame and the rear axle. The resilient member comprises a cylindrical rubber pad which is preferably hollow, having lower and upper plates bonded to the opposite ends thereof with the lower plate secured to the housing of the axle as by bolting, welding, etc., and the upper plate providing a bearing surface for engaging the frame. A cylindrical casing extends partially downwardly from the upper plate in outwardly spaced circumferential relation to the pad.

A problem has arisen in the installation of such stabilizer structures in that the pad must be compressed into a preloaded condition by use of a crane, hydraulic jack, rack device, etc. Conventionally, the axle is pivotally mounted and it has been found difficult to align the mounting hole of the axle with the pivot pin while maintaining the preload on the stabilizer pads.

FR—A—2,009,582 discloses a vehicle having a frame; a transverse equalizer bar pivotally connected to the frame about an axis extending along a centre line of the vehicle for carrying ground-engaging tractive means of the vehicle; and a pair of preloaded energy-absorbing pad assemblies positioned one on each side of the pivot axis and each comprising a baseplate carried by the equalizer bar; a resiliently compressible pad carried on the baseplate; a cover plate overlying the pad to engage the frame and having a connecting portion; and removable clamps for use during assembly of the pad assemblies, each clamp having a first portion to be removably secured to the connecting portion of the respective cover plate, and a second portion to be releasably locked to the equalizer bar as an incident of a clamping force being developed in the clamp to compressively preload the respective pad between its cover plate and baseplate. Such a vehicle is hereinafter referred to as of the kind described.

However, in this proposal the frame is pivoted, not to the equalizer bar proper, which carries the baseplates of the pad assemblies, but to an intermediate member which forms the cover plates for the two pad assemblies. As a result, the pad assemblies can only absorb relative vertical movement between the frame and equalizer bar, and cannot cushion pivotal movement of the equalizer bar relatively to the frame. Furthermore, the pad assemblies are permanently preassembled with the equalizer bar so no problem of making the pivotal connection arises.

According to the invention, a vehicle of the kind described is characterised in that, upon release of the respective clamp, each pad urges the respective cover plate forcibly against the frame at the respective side of the pivot axis to provide a preselected resilient resistance to any pivotal movement of the equalizer bar relatively to the frame during subsequent operation of the vehicle.

The clamp may define a U-shaped structure for embracing the equalizer bar and having leg portions removably secured to the cover plate connecting portion for providing the preload to the pad during the assembly of the vehicle. Upon completion of the assembly, the clamp may be readily removed from engagement with the cover plate, permitting the pad to function in the normal stabilizing manner through the cover plate and against the frame, as indicated above.

The clamp may have screw threaded force-adjusting means for effecting a predetermined accurate preloading of the pad.

The connecting portion of the cover plate preferably defines a plurality of spaced screw threaded recesses and the clamp includes a pressure bar and tie rods for releasably engaging the pressure bar and adjustable screw threaded engagement in the recesses.

The cover plate may have a downwardly open recess capturing a portion of the pad therein, and effectively retaining the pad positionally within the assembly.

The baseplate may have a top portion mounted on the top of the equalizer bar and a securing portion depending from the top portion at least one-half the height of the equalizer bar; and securing means securing the securing portion to the equalizer bar at a midportion thereof substantially midway between the top and bottom of the equalizer bar. The extension of the securing portion to at least approximately the midportion of the equalizer bar permits e.g. screw threaded securing means to be utilized at substantially the neutral axis of the equalizer bar thereby effectively minimizing stress concentrations and providing improved life of the vehicle structure.

In one illustrated example, the securing portion of the baseplate comprises a single flange which extends from one edge of the top portion only.

The depending securing portion may be connected to the top portion by a protuberant connection permitting limited movement of the top portion relative to the top of the equalizer bar.

In another construction, the baseplate is provided with a pair of depending flanges, one each at the front and rear thereof so as to embrace the top of the equalizer bar.

Means may be provided for preventing movement of the baseplate relative to the equalizer bar. Thus, in one construction, a tongue is provided on the baseplate and has an end portion engaging a frame stop portion for preventing movement of the baseplate relative to the equalizer bar; the frame stop portion also acting to limit movement of the equalizer bar relative to the frame.

In this construction, the baseplate may effectively be frictionally retained on the top of the equalizer bar by the action of the compressed pad acting downwardly therethrough.

In the accompanying drawings:

Figure 1 is a fragmentary elevation of a portion of a vehicle having an equalizer bar pivotally mounted to a frame with the oscillatory movement of the equalizer bar relative to the frame being stabilized by a pair of energy-absorbing pad assemblies embodying the invention;

Figure 2 is a fragmentary exploded view of one of the energy-absorbing pad assemblies;

Figure 3 is a fragmentary enlarged vertical section taken substantially on the line 3—3 of Figure 1;

Figure 4 is a fragmentary enlarged elevation illustrating a modified form of energy-absorbing pad assembly embodying the invention; and

Figure 5 is a fragmentary exploded view thereof.

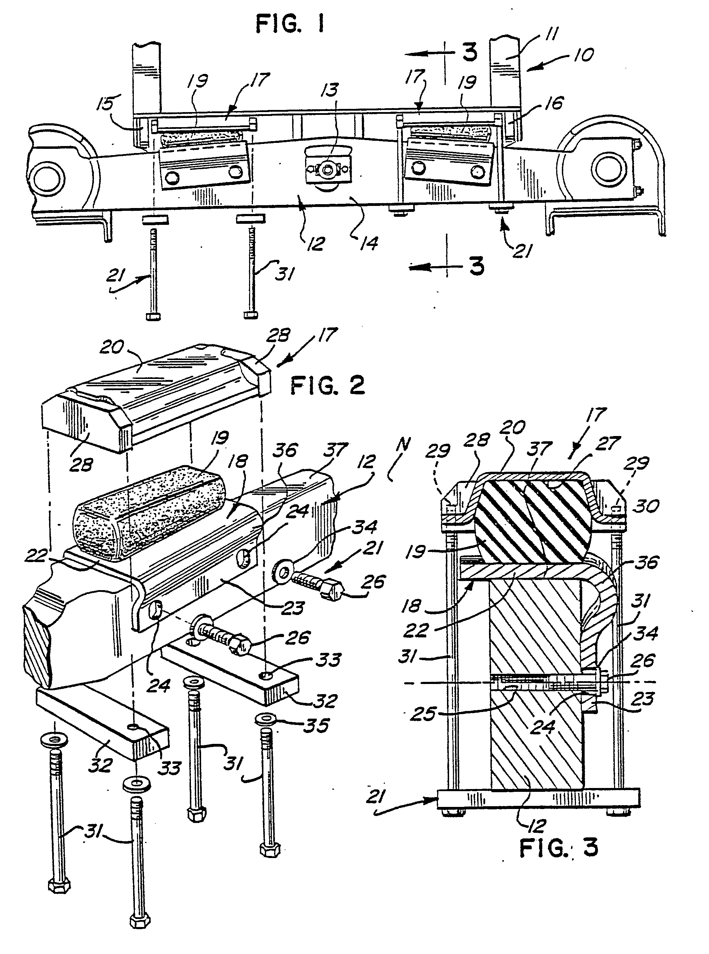

In the exemplary embodiment of the invention as disclosed in Figures 1—3 of the drawings, a vehicle structure generally designated 10 is shown to include a frame 11. An equalizer bar 12 is pivotally mounted to the frame by a pivot 13 at a midportion 14 of the equalizer bar. Limited pivotal movement of the equalizer bar is permitted by suitable stops 15 and 16 carried by the frame.

A pair of preloaded energy-absorbing pad assemblies generally designated 17 is provided one each at opposite sides of the pivot 13. The pad assemblies are reversely similar, as shown in Figure 1, and the structure thereof is shown in greater detail in Figures 2 and 3.

More specifically, each of the pad assemblies 17 includes a baseplate generally designated 18, a resiliently compressible pad 19, a cover plate 20, and a removable clamp structure generally designated 21. As shown, the baseplate includes a top portion 22 overlying the equalizer bar 12 and a securing portion 23 depending from the top portion. The securing portion extends preferably at least approximately one half the height of the equalizer bar 12 and is provided with a pair of openings 24 located approximately halfway between the top and bottom of the equalizer bar so as to be aligned substantially with the neutral axis N of the equalizer bar. As shown in Figure 3, the equalizer bar may be provided with a pair of through bores 25 aligned with the openings 24 of the baseplate 18 and are threaded so as to have threaded engagement with a pair of bolts 26 extended through openings 24 to secure the baseplate 18 to the equalizer bar.

Pad 19 comprises a resiliently compressible pad formed of a material, such as a rubber, which may be bonded to the top portion 22 of the baseplate as by being vulcanized thereto. As shown in Figure 3, the cover plate defines a downwardly opening recess 27 receiving the top portion of the pad 19. As shown in Figure 2, the cover plate further includes connecting portion 28 which, as shown in Figure 3, may include threaded downwardly opening recesses 29 for receiving the threaded ends 30 of tie bolts 31 forming a portion of the clamp assembly 21.

As shown in Figure 2, the clamp assembly 21 further includes a pair of pressure bars 32 provided with through openings 33 for passing the threaded tie rods 31. As shown in Figure 2, hardened steel washers 34 may be associated with bolts 26 and hardened steel washers 35 may be associated with tie bolts 31.

As best seen in Figure 3, support portion 23 may be connected to the top of portion 22 of baseplate 18 by a protuberant connecting portion 36 which permits limited movement of the top portion 22 relative to the top surface 37 of the equalizer bar.

In the illustrated embodiment, pad 19 of assembly 17 has a length of approximately 10″, a height of approximately 4″, and a thickness of approximately $3\frac{1}{2}″$. The pad is preloaded by means of the clamp structure 21, as shown in Figure 3, so as to permit facilitated assembly of the equalizer bar and associated vehicle structure relative to the frame. In the illustrated embodiment, the pad 19 is placed under approximately 6700 lbs. of preload force. To effect such preload force, a pressure of approximately 170 psi is thereacross by the clamp structure. In the use of the vehicle the equalizer bar may be oscillated approximately 1° about the pivot 13 thus placing an additional force on the compressed pad of approximately 3800 lbs. so that the total force may be approximately 10,500 lbs. and the pressure being applied thereacross is approximately 267 psi.

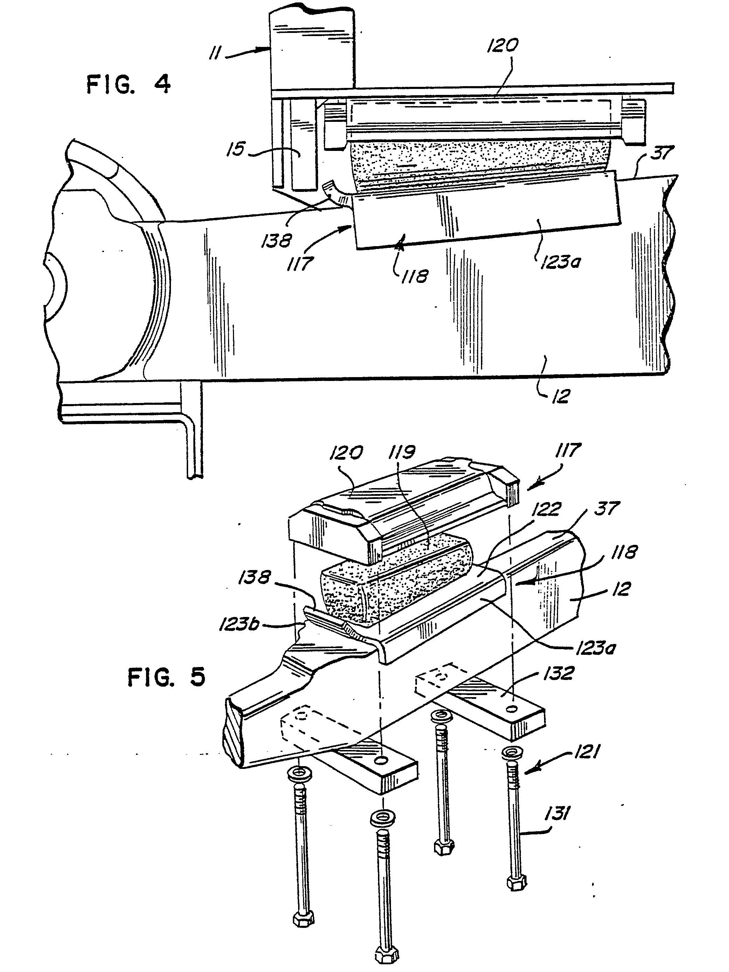

Referring now to the embodiment of Figures 4 and 5, a modified form of pad assembly generally designated 117 is shown to comprise a pad assembly generally similar to pad assembly 17 but utilizing a modified means for preventing movement of the baseplate 118 relative to the equalizer bar 12. More specifically, as shown, baseplate 118 includes a top portion 122 having depending side flanges 123A and 123B arranged to embrace the top surface 37 of the equalizer bar and thus retain the baseplate against lateral movement thereon.

Baseplate 118 is retained against longitudinal movement on the equalizer bar by means of a tongue 138 extending arcuately from one end of the top portion 122 to adjacent the frame stop, such as frame stop 15 in

Figure 4.

Thus, pad assemblies 117 are similar to and function similarly to the pad assemblies 17. The elements of pad assemblies 117 which are similar to corresponding elements of pad assemblies 17 are identified by reference numerals 100 higher (see pad 119, cover plate 120, clamp 121, tie bolts 131 and pressure bars 132).

Industrial Applicability

The preloaded pad assemblies are utilized in connection with the equalizer bar of a track-type vehicle and the relatively high spring rate of the pads of the assemblies provides a stiff suspension while yet reducing shock loads on the vehicle and assuring extended trouble free life thereof. In addition, the utilization of the pad assemblies provides an improved ride for the operator of the vehicle providing further efficiency in the use of the vehicle.

By facilitating the assembly of the vehicle, further cost savings are recognized as discussed above. The reusability of the removable portions of the clamping structure provides further cost saving in the utilization of the invention.

**Claims**

1. A vehicle (10) having a frame (11); a transverse equalizer bar (12) pivotally connected to the frame about an axis (13) extending along a centre line of the vehicle for carrying ground-engaging tractive means of the vehicle; and a pair of preloaded energy-absorbing pad assemblies (17, 117) positioned one on each side of the pivot axis (13) and each comprising a baseplate (18, 118) carried by the equalizer bar; a resiliently compressible pad (19, 119) carried on the baseplate; a cover plate (20, 120) overlying the pad to engage the frame and having a connecting portion (28); and removable clamps (21, 121) for use during assembly of the pad assemblies, each clamp having a first portion (31, 131) to be removably secured to the connecting portion of the respective cover plate, and a second portion (32, 132) to be releasably locked to the equalizer bar as an incident of a clamping force being developed in the clamp to compressively preload the respective pad between its cover plate and baseplate; characterised in that, upon release of the respective clamp, each pad urges the respective cover plate forcibly against the frame at the respective side of the pivot axis to provide a preselected resilient resistance to any pivotal movement of the equalizer bar relatively to the frame during subsequent operation of the vehicle.

2. A vehicle according to claim 1, wherein the clamp (21, 121) defines a U-shaped structure for embracing the equalizer bar and having leg portions (31, 131) to be removably secured to the cover plate (20, 120) connecting portion.

3. A vehicle according to claim 2, wherein the clamp (21, 121) also has screw threaded force-adjusting means for effecting a predetermined accurate preloading of the pad.

4. A vehicle according to any one of the preceding claims, wherein the connecting portion (28) of the cover plate (20) has a plurality of spaced screw threaded recesses (29) and the clamp (21, 121) includes a pressure bar (32, 132) and tie rods (31, 131) for releasably engaging the pressure bar and adjustable screw threaded engagement in the recesses.

5. A vehicle according to any one of the preceding claims, wherein the cover plate (20, 120) has a downwardly open recess (27) capturing a portion of the pad (19, 119) therein.

6. A vehicle according to any one of the preceding claims, including means (26, 123A, 123B, 138) for preventing movement of the baseplate (18, 118) relative to the equalizer bar (12).

7. A vehicle according to claim 6, wherein a tongue (138) is provided on the baseplate (118) and has an end portion engaging a frame stop portion (15, 16) for preventing movement of the baseplate relative to the equalizer bar (12); the frame stop portion also acting to limit movement of the equalizer bar relative to the frame.

8. A vehicle according to any one of claims 1 to 6, wherein the baseplate (18) has a top portion (22) mounted on the top of the equalizer bar (12) and a securing portion (23) depending from the top portion at least one-half the height of the equalizer bar; and securing means (26) securing the securing portion to the equalizer bar at a midportion thereof substantially midway between the top and bottom of the equalizer bar.

9. A vehicle according to claim 8, wherein the securing means comprises screw threaded means (24) screwed to the equalizer bar (12) at the midportion thereof.

10. A vehicle according to claim 8 or claim 9, wherein the securing portion (23) of the baseplate comprises a single flange extending from one edge of the top portion (22).

**Revendications**

1. Véhicule (10) ayant un châssis (11); une barre d'équilibage transversale (12) reliée à pivotement au châssis autour d'un axe (13) s'étendant le long d'une ligne centrale du véhicule pour porter les moyens de traction du véhicule en prise avec le sol; et deux ensembles d'amortissement absorbeurs d'énergie précontraints (17, 117) et placés un de chaque côté de l'axe de pivotement (13) et comprenant chacun une plaque de base (18, 118) portée par la barre d'équilibrage; un coussinet élastiquement compressible (19, 119) monté sur la plaque de base; un couvercle (20, 120) surplombant le coussinet pour venir en contact avec le châssis et ayant une partie de liaison (28); et des éléments de serrage amovibles (21, 121) destinés à être utilisés pendant l'assemblage des ensembles d'amortissement, chaque élément de serrage ayant une première partie (31, 131) destinée à être fixée de façon amovible à la partie de liaison du couvercle correspondant, et une seconde partie (32, 132) destinée à être verrouillée de façon libérablé à la barre d'équilibrage de fait de la force de serrage développée dans l'élément de serrage afin de précontraindre par compression le coussinet correspondant entre son couvercle et la plaque de base, caractérisé en ce que, lors de la libération de l'élément de serrage correspondant, chaque coussinet sollicite le couvercle correspondant positivement contre le châssis, du côté correspondant de l'axe de pivotement afin d'opposer une résistance élastique prédéterminée à tout mouvement de pivotement de la barre d'équilibrage par rapport au châssis durant le fonctionnement suivant du véhicule.

2. Véhicule selon la revendication 1, caractérisé en ce que le dispositif de serrage (21, 121) présente une structure en U pour embrasser la barre d'équilibrage et comporte des jambes (31, 131) destinées à être fixées de façon amovible à la partie de liaison du couvercle (20, 120).

3. Véhicule selon la revendication 2, dans lequel l'élément de serrage (21, 121) comporte également un moyen de réglage de force fileté pour réaliser une précontrainte précise prédéterminée du coussinet.

4. Véhicule selon l'une quelconque des revendications précédentes, dans lequel la partie de liaison (28) du couvercle (20) comporte plusieurs cavités taraudées espacées (29) et l'élément de serrage (21, 121) comporte une barrette de pression (32, 132) et des tirants (31, 131) pour appliquer de façon libérable la barrette de pression et pour être vissés de façon réglable dans les cavités.

5. Véhicule selon l'une quelconque des revendications précédentes, dans lequel le couvercle (20, 120) comporte une cavité s'ouvrant vers le bas (27) emprisonnant une partie du coussinet (19, 119).

6. Véhicule selon l'une quelconque des revendications précédentes, comprenant des moyens (26, 123A, 123B, 138) pour empêcher un mouvement de la plaque de base (18, 118) par rapport à la barre d'équilibrage (12).

7. Véhicule selon la revendication 6, dans lequel une languette (138) est prévue sur la plaque de base (118) et comporte une partie d'extrémité s'appliquant contre une butée (15, 16) du châssis de façon à empêcher un mouvement de la plaque de base par rapport à la barre d'équilibrage (12); la butée du châssis servant aussi à limiter le mouvement de la barre d'équilibrage par rapport au châssis.

8. Véhicule selon l'une quelconque des revendications 1 à 6, dans lequel la plaque de base (18) comporte une partie supérieure (22) montée sur le dessus de la barre d'équilibrage (12), et une partie de fixation (23) s'abaissant de la partie supérieure sur au moins la moitié de la hauteur de la barre d'équilibrage; et des moyens de fixation (26) reliant la partie de fixation à la barre d'équilibrage à la partie centrale de celle-ci, sensiblement au milieu entre le dessus et le dessous de la barre d'équilibrage.

9. Véhicule selon la revendication 8, dans lequel les moyens de fixation comprennent un élément fileté (24) vissé dans la région centrale de la barre d'équilibrage (12).

10. Véhicule selon la revendication 8 ou 9, dans lequel la partie de fixation (23) de la plaque de base comprend une seule bordure s'étendant depuis l'un des bords de la partie supérieure (22).

## Patentansprüche

1. Fahrzeug (10) mit einem Rahmen (11), einer quer verlaufenden Ausgleichsstange (12) schwenkbar verbunden mit dem Rahmen um eine sich längs einer Mittellinie des Fahrzeugs erstreckenden Achse, um in Erdeingriff stehende Zugmittel des Fahrzeugs zu tragen, und ein Paar von vorbelasteten Energie absorbierenden Kissenanordnungen (17, 117), von denen eine auf jeder Seite der Schwenkachse (13) angeordnet ist und jede eine durch die Ausgleichsstange getragene Basisplatte (18, 118) aufweist, ein von der Basisplatte getragenes elastisch zusammendrückbares Kissen (19, 119), eine über dem Kissen liegende Abdeckplatte (20, 120) zum Eingriff mit dem Rahmen und mit einem Verbindungsteil (28) und entfernbare Klemmvorrichtungen (21, 121) zur Verwendung während des Zusammenbaus der Kissenanordnungen, wobei jede Klemmvorrichtung einen ersten Teil (31, 131) zur entfernbaren Befestigung am Verbindungsteil der entsprechenden Abdeckplatte sowie einen zweiten Teil (32, 132) aufweist, der in lösbarer Weise an der Ausgleichsstange verriegelt werden kann, wenn ein Auftreffen einer Klemmkraft in der Klemmvorrichtung entwickelt wird, um das entsprechende Kissen zwischen seiner Abdeckplatte und der Basisplatte kompressiv vorzubelasten, dadurch gekennzeichnet, daß bei der Freigabe der entsprechenden Klemmvorrichtung jedes Kissen die entsprechende Abdeckplatte unter Kraftausübung gegen den Rahmen an der entsprechenden Seite der Schwenkachse drückt, um einen vorgewählten elastischen Widerstand gegenüber jeder Schwenkbewegung der Ausgleichsstange bezüglich des Rahmens während des darauffolgenden Betriebs des Fahrzeugs vorzusehen.

2. Fahrzeug nach Anspruch 1, wobei die Klemmvorrichtung (21, 121) eine U-förmige Struktur definiert, um die Ausgleichsstange zu umfassen und ferner mit Schenkelteilen (31, 131) zur entfernbaren Befestigung am Verbindungsteil der Abdeckplatte (20, 120).

3. Fahrzeug nach Anspruch 2, wobei die Klemmvorrichtung (21, 121) ebenfalls mit Schraubengewinde versehene Krafteinstellmittel aufweist, um die vorbestimmte genaue Vorbelastung des Kissens zu bewirken.

4. Fahrzeug nach irgendeinem der vorhergehenden Ansprüche, wobei der Verbindungsteil (28) der Abdeckplatte (20) eine Vielzahl von mit Abstand angeordneten mit Schraubengewinde ausgestatteten Ausnehmungen (29) aufweist, und wobei die Klemmvorrichtung (21, 121) eine Druckstange (32, 132) und Verbindungsstangen (31, 131) aufweist für den lösbaren Eingriff mit der Druckstange und den einstellbaren Schraubeingriff in den Ausnehmungen.

5. Fahrzeug nach irgendeinem der vorhergehenden Ansprüche, wobei die Abdeckplatte (20, 120) eine nach unten offene Ausnehmung (27) aufweist, die einen Teil des Kissens (19, 119) darinnen einfängt.

6. Fahrzeug nach irgendeinem der vorhergehenden Ansprüche mit Mitteln (26, 123A, 123B, 138) zur Verhinderung der Bewegung der Basisplatte (18, 118) bezüglich der Ausgleichsstange (12).

7. Fahrzeug nach Anspruch 6, wobei eine Zunge (138) an der Basisplatte (118) vorgesehen ist und einen Endteil besitzt, der mit einem Rahmenanschlagteil (15, 16) in Eingriff steht, um die Bewegung der Basisplatte bezüglich der Ausgleichsstange (12) zu verhindern, wobei der Rahmenanschlagteil auch die Begrenzung der Bewegung der Ausgleichsstange bezüglich des Rahmens bewirkt.

8. Fahrzeug nach irgendeinem der Ansprüche 1 bis 6, wobei die Basisplatte (18) einen oberen an der Oberseite der Ausgleichsstange (12) befestigten Teil (22) und einen Befestigungsteil (23) aufweist, der vom oberen Teil mindestens die Hälfte der Höhe der Ausgleichsstange herabsteht, und wobei ferner Befestigungsmittel (26) vorgesehen sind zur Befestigung des Befestigungsteils an der Ausgleichsstange am Mittelteil derselben im wesentlichen mittig zwischen dem oberen und dem unteren Ende der Ausgleichsstange.

9. Fahrzeug nach Anspruch 8, wobei die Befestigungsmittel Schraubengewindemittel (24) aufweisen, verschraubt mit der Ausgleichsstange (12) am Mittelteil derselben.

10. Fahrzeug nach Anspruch 8 oder 9, wobei der Befestigungsteil (23) der Basisplatte einen einzigen Flansch aufweist, der sich von einer Kante des oberen Teils (22) aus erstreckt.

FIG. 1

FIG. 2

FIG. 3

0 025 434

FIG. 4

FIG. 5

2